(19) Europäisches Patentamt
European Patent Office
Office européen des brevets

(11) EP 3 270 448 A1

(12) **EUROPEAN PATENT APPLICATION**
published in accordance with Art. 153(4) EPC

(43) Date of publication:
**17.01.2018 Bulletin 2018/03**

(21) Application number: **16764473.1**

(22) Date of filing: **11.03.2016**

(51) Int Cl.:
***H01M 8/02*** *(2016.01)* ***B01J 41/04*** *(2017.01)*
***B01J 41/14*** *(2006.01)* ***B01J 47/12*** *(2017.01)*
***C08J 5/22*** *(2006.01)* ***C08J 7/18*** *(2006.01)*
***H01B 1/06*** *(2006.01)* ***H01B 13/00*** *(2006.01)*
***H01M 8/10*** *(2016.01)*

(86) International application number:
**PCT/JP2016/001409**

(87) International publication number:
**WO 2016/147642 (22.09.2016 Gazette 2016/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.03.2015 JP 2015051420**
**24.12.2015 JP 2015252125**

(71) Applicant: **Nitto Denko Corporation**
**Ibaraki-shi, Osaka 567-8680 (JP)**

(72) Inventors:
- **MATSUDA, Koso**
  **Ibaraki-shi**
  **Osaka 567-8680 (JP)**
- **SUZUKI, Takashi**
  **Ibaraki-shi**
  **Osaka 567-8680 (JP)**
- **NAKANO, Takeshi**
  **Ibaraki-shi**
  **Osaka 567-8680 (JP)**
- **NISHII, Hiroyuki**
  **Ibaraki-shi**
  **Osaka 567-8680 (JP)**

(74) Representative: **Hart-Davis, Jason et al**
**Cabinet Beau de Loménie**
**158, rue de l'Université**
**75340 Paris Cedex 07 (FR)**

# (54) ANION-EXCHANGE MEMBRANE, AND ELECTROCHEMICAL ELEMENT AND ELECTROCHEMICAL DEVICE HAVING SAME

(57) Provided is an anion-exchange membrane including: a substrate composed of a film of ultrahigh molecular weight polyolefin; and a graft chain having the following structural unit.

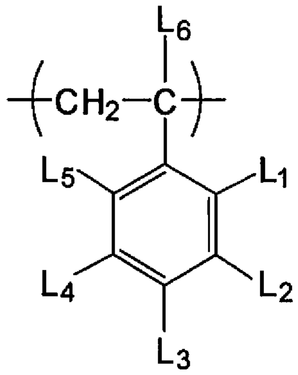

$L_1$ to $L_5$ are each independently a hydrogen atom, an alkyl group having 1 to 4 carbon atoms, an alkanol group

EP 3 270 448 A1

having 1 to 4 carbon atoms, or a specific functional group including an anion-exchange group, and an example of the functional group is $-Z_2-M_1-Z_1(R_1)(R_2)(R_3)$. $R_1$ to $R_3$ are directly bonded to $Z_1$ and are each independently an alkyl group having 1 to 8 carbon atoms or an alkanol group having 1 to 8 carbon atoms. $M_1$ is a linear hydrocarbon chain having 3 to 8 carbon atoms, $Z_1$ is a nitrogen atom or a phosphorus atom, and $Z_2$ is a nitrogen atom bonded to one hydrogen atom, an oxygen atom, or a sulfur atom. $L_6$ is a hydrogen atom, a methyl group, or an ethyl group.

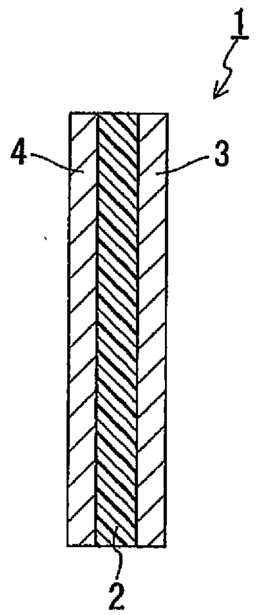


FIG.1

## Description

### TECHNICAL FIELD

The present invention relates to an anion-exchange membrane, an electrochemical element including the anion-exchange membrane, and an electrochemical device including the anion-exchange membrane.

### BACKGROUND ART

Known examples of electrochemical devices, which provide electrical energy through a chemical reaction or which cause a chemical reaction upon input of electrical energy, include various batteries and hydrogen production devices. Polymer electrolyte fuel cells (PEFCs), which are a type of electrochemical device, employ a polymer electrolyte membrane as an ion exchange part. PEFCs have the advantage of being operable at lower temperatures than other types of fuel cells and having high output density, and are therefore highly expected to become widely used in the future. Conventional PEFCs are typically of the cation-exchange type employing a cation-exchange membrane that conducts hydrogen ions. However, in recent years, there have been an increasing number of reports of anion-exchange PEFCs employing an anion-exchange membrane, partly because anion-exchange PEFCs are capable of generating electricity without using a catalyst containing platinum which is expensive and the resources of which are scarce.
Anion-exchange PEFCs can use a liquid fuel (alkaline liquid fuel) such as an alcohol or hydrazine. For example, the use of hydrazine as a fuel has a great advantage in that, according to the electricity generation principle, the fuel does not produce $CO_2$ despite being a liquid fuel.
A specific example of known anion-exchange polymer electrolyte membranes is an anion-exchange membrane having a graft chain (see Patent Literature 1, for example). General anion-exchange membranes have a structure (such as a benzyltrialkylammonium structure) in which an anion-exchange group (functional group having anionic conductivity) is bonded to a phenyl group via a methylene group.

### CITATION LIST

#### Patent Literature

Patent Literature 1: JP 2010-516853 A

### SUMMARY OF INVENTION

#### Technical Problem

An electrochemical device of the anion exchange type, such as an anion-exchange PEFC, makes use of the migration of anions ($OH^-$) resulting from oxidation-reduction reaction at the cathode, and the internal environment of the electrochemical device is alkaline. A polymer electrolyte membrane used in such an electrochemical device is therefore required to be resistant to decomposition in an alkaline environment.
However, anion-exchange polymer electrolyte membranes having a benzyltrialkylammonium structure are by no means chemically stable. For example, the benzyltrimethylammonium structure exposed to an alkaline environment is likely to undergo elimination of a trialkylamine or methyl group. This is why the amount of ion-exchange groups contained in an anion-exchange membrane having a benzyltrimethylammonium structure tends to decrease in an alkaline environment.
An object of the present invention is to provide an anion-exchange polymer electrolyte membrane having high chemical resistance, in particular high alkali resistance.

#### Solution to Problem

The present invention provides an anion-exchange membrane including: a substrate composed of a film of ultrahigh molecular weight polyolefin; and a graft chain having a structural unit represented by formula (1) shown below.
In the formula (1),
$L_1$ to $L_5$ are each independently a hydrogen atom, an alkyl group having 1 to 4 carbon atoms, an alkanol group having 1 to 4 carbon atoms, or a structure represented by formula (2-1) or (2-2) shown below,
at least one of $L_1$ to $L_5$ is a structure represented by the formula (2-1) or (2-2), and
$L_6$ is a hydrogen atom, a methyl group, or an ethyl group.
In the formulae (2-1) and (2-2),

$R_1$ to $R_3$, $R_{11}$ to $R_{13}$, and $R_{21}$ to $R_{23}$ are each independently an alkyl group having 1 to 8 carbon atoms or an alkanol group having 1 to 8 carbon atoms,
$M_1$, $M_{11}$, and $M_{21}$ are each independently a linear hydrocarbon chain having 3 to 8 carbon atoms,
the hydrocarbon chain may have a substituent replacing a hydrogen atom bonded to a carbon atom of the hydrocarbon chain,
the substituent is at least one selected from the group consisting of a halogen atom or an alkyl group having 1 to 5 carbon atoms,
$Z_1$, $Z_{11}$, and $Z_{21}$ are each independently a nitrogen atom or a phosphorus atom,
$Z_2$ is a nitrogen atom bonded to one hydrogen atom, an oxygen atom, or a sulfur atom, and
$Z_{12}$ is a nitrogen atom.

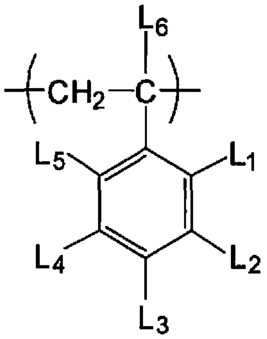
(1)

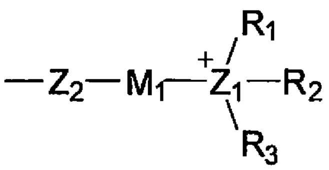
(2-1)

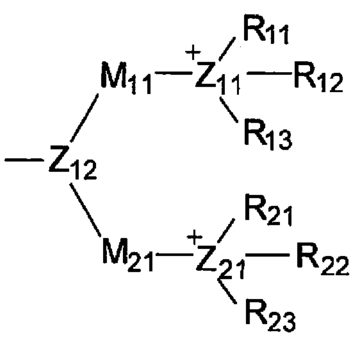
(2-2)

In another aspect, the present invention provides an electrochemical element including the anion-exchange membrane according to the present invention.

In still another aspect, the present invention provides an electrochemical device including the electrochemical element according to the present invention.

Advantageous Effects of Invention

The present invention can provide an anion-exchange polymer electrolyte membrane (anion-exchange membrane) that is less likely to suffer a decrease in ionic conductivity even when used in an alkaline environment. The present invention can also provide an electrochemical element that exploits the properties of such an anion-exchange membrane. The present invention can further provide an electrochemical device that exploits the properties of such an electrochemical element.

BRIEF DESCRIPTION OF DRAWINGS

FIG. 1 is a cross-sectional view schematically showing an exemplary membrane-electrode assembly (MEA) which is a preferred example of the electrochemical element according to the present invention.

FIG. 2 is a cross-sectional view schematically showing an exemplary PEFC which is a preferred example of the electrochemical device according to the present invention.

DESCRIPTION OF EMBODIMENTS

Hereinafter, embodiments of the present invention will be described with reference to examples. The present invention is not limited to the examples described below. For instance, although a PEFC is described below as an exemplary electrochemical device, the present invention is applicable also to electrochemical devices other than PEFCs, including: electrolysis devices such as a hydrogen production device; salt production devices; and water purification devices. The present invention is also applicable to electrochemical elements other than membrane-electrode assemblies (MEAs), although a MEA is described below as an exemplary electrochemical element.

(Anion-exchange polymer electrolyte membrane)

An anion-exchange polymer electrolyte membrane (anion-exchange membrane) according to the present embodiment includes a substrate composed of a film of ultrahigh molecular weight polyolefin and graft-polymerized with a graft chain. In other words, the anion-exchange membrane according to the present embodiment is a graft-polymerized membrane including a film of ultrahigh molecular weight polyolefin as a substrate (substrate film).

The anion-exchange membrane according to the present embodiment preferably has a dry thickness of 100 μm or less. The dry thickness of the anion-exchange membrane according to the present embodiment is more preferably 80 μm or less and particularly preferably 60 μm or less. The lower limit of the dry thickness of the anion-exchange membrane according to the present embodiment is not particularly defined and is, for example, 15 μm. The term "dry" as used herein to describe the thickness of the anion-exchange membrane refers to a state of the anion-exchange membrane having been left in an atmosphere conditioned to a temperature of 23°C and a humidity of 53% RH for 24 hours or more.

The anion-exchange membrane according to the present embodiment preferably has a low hydrazine permeability coefficient and a high ionic conductivity. For example, the anion-exchange membrane (carbonate type) according to the present embodiment may have an ionic conductivity in the range of 12 to 21 mS/cm. The hydrazine permeability coefficient may be in the range of 0.1 to 0.6 mmol/m • hr. The ratio of hydrazine permeability coefficient [mmol/m • hr] to ionic conductivity [mS/cm] may be in the range of $8 \times 10^{-3}$ to $2.5 \times 10^{-2}$. The ionic conductivity and hydrazine permeability coefficient can be measured by the methods described in EXAMPLES below.

The amount of area change that the anion-exchange membrane according to the present embodiment can undergo is preferably small. An anion-exchange membrane that undergoes a smaller area change can make a contribution to preventing separation of the anion-exchange membrane from an electrode in a MEA.

The substrate included in the anion-exchange membrane according to the present embodiment is composed of a film of ultrahigh molecular weight polyolefin. Ultrahigh molecular weight polyolefin has higher alkali resistance, higher mechanical strength, and higher fuel blocking performance (in particular, alkaline fuel blocking performance) than fluorinated polymers such as perfluoroalkylvinyl ether copolymers (such as Nafion (registered trademark)) which have hitherto been widely used in cation-exchange membranes (typically proton-exchange membranes) of cation-exchange PEFCs and than common polyolefins such as high-density polyethylene (HDPE) and low-density polyethylene (LDPE) as disclosed in Patent Literature 1. For example, when a common polyolefin film is used as the substrate of an anion-exchange membrane, the anion-exchange membrane is readily swollen during operation of a PEFC including the membrane due to the low softening point and low strength of the polyolefin film, and has considerably lower fuel blocking performance than when an ultrahigh molecular weight polyolefin film is used as the substrate. Additionally, ultrahigh molecular weight polyolefin exhibits higher dimensional stability when subjected to graft polymerization as a substrate than common polyolefins such as HDPE and LDPE. These beneficial properties of ultrahigh molecular weight polyolefin are due to its unique features attributed to the very high molecular weight, as seen from the fact that ultrahigh molecular weight polyolefin is categorized as an engineering plastic unlike common polyolefins. Furthermore, unlike fluorinated polymers, ultrahigh molecular weight polyolefin does not discharge halogen into the surrounding environment when discarded and thus has low environmental impact. In addition, ultrahigh molecular weight polyolefin is more suitable for formation of grafted membranes in terms of monomer penetration rate and allows more cost-effective production of grafted membranes than aromatic hydrocarbon polymers.

The weight-average molecular weight of the ultrahigh molecular weight polyolefin used is, for example, 1,000,000 to 4,000,000, preferably 1,500,000 to 3,500,000, and more preferably 2,000,000 to 3,000,000. If the molecular weight is excessively large, the ultrahigh molecular weight polyolefin is difficult to form into a film. If the molecular weight is excessively small, then this may lead to a failure to achieve sufficient alkali resistance, sufficient mechanical strength,

or sufficient fuel blocking performance.

The weight-average molecular weight of the ultrahigh molecular weight polyolefin can be determined by gel permeation chromatography (GPC). For example, one possible method is to dissolve the resin (which may be in the form of a film) to be examined in a solvent (such as o-dichlorobenzene) while applying heat if necessary and then perform GPC measurement on the resulting solution. In the preparation of the solution, a portion of the resin may remain undissolved depending on the molecular weight of the resin or on the presence or absence of crosslinks. In this case, the measurement result obtained for the other portion dissolved in the solvent is employed as the weight-average molecular weight of the resin. The measured value is rounded to the nearest 10,000.

The substrate included in the anion-exchange membrane according to the present embodiment is preferably an unstretched film. An ultrahigh molecular weight polyolefin film may be formed by an inflation method. When an ultrahigh molecular weight polyolefin film is formed by an inflation method, a force corresponding to stretching acts during the formation of the film, so that crystals of the ultrahigh molecular weight polyolefin are stacked in layers in the thickness direction of the film. When a substrate of an anion-exchange membrane has such crystals stacked in layers in the thickness direction of the substrate, the crystals can impede the anionic conduction in the thickness direction of the anion-exchange membrane. Furthermore, a graft component having anionic conductivity is introduced between the crystals by graft polymerization. If, therefore, the crystals are stacked in layers in the thickness direction of the substrate, graft polymerization results in introduction of the graft component between the crystal layers, thus causing the substrate to be swollen preferentially in its thickness direction. This leads to an increased thickness of the resulting anion-exchange membrane, and the use of such a thick anion-exchange membrane in a PEFC may cause an increase in membrane resistance during operation (electricity generation) of the PEFC.

The substrate included in the anion-exchange membrane according to the present embodiment is preferably composed of a skived film (film made by skiving) of ultrahigh molecular weight polyolefin. The use of a skived film obtained by skiving a block of ultrahigh molecular weight polyolefin can result in a higher anionic conductivity than, for example, the use of a film formed by an inflation method. This is presumably because the crystalline state of an ultrahigh molecular weight polyolefin film greatly varies depending on the method used for producing the film. In a skived film of ultrahigh molecular weight polyolefin, fine crystals of ultrahigh molecular weight polyolefin are randomly oriented.

When a skiving method is employed to form a substrate, the resulting substrate can have a uniform thickness; for example, a substrate in the form of a thin membrane having a uniform thickness can be obtained. Unlike the formation of a substrate by an inflation method, the formation of a substrate by a skiving method allows the crystals not to be stacked in layers in the thickness direction of the resulting film, thus reducing the likelihood that a graft component is introduced between the crystals as a result of graft polymerization. The use of a skiving method is believed to reduce the increase in thickness caused by graft polymerization, as compared to the use of an inflation method. When, therefore, a substrate composed of a skived film of ultrahigh molecular weight polyolefin is used, the control of the thickness of an anion-exchange membrane including the substrate is easy, and the anion-exchange membrane can easily be obtained in the form of a thin membrane.

Whether an ultrahigh molecular weight polyolefin film is a skived film can be determined based on the difference in crystal structure between skived films and films other than skived films. The crystal structure can be examined, for example, with a transmission electron microscope (TEM).

The ultrahigh molecular weight polyolefin is, for example, ultrahigh molecular weight polyethylene or ultrahigh molecular weight polypropylene. Various types of skived films of ultrahigh molecular weight polyethylene different in molecular weight or in thickness are commercially sold and thus are relatively easily available. Considering the relatively high availability, ultrahigh molecular weight polyethylene is preferred.

In the anion-exchange membrane according to the present embodiment, the substrate is graft-polymerized with a graft chain having a structural unit represented by the following formula (1).

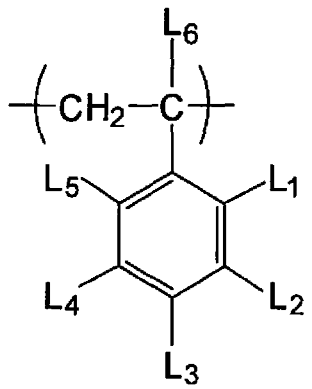

(1)

In the formula (1), $L_1$ to $L_5$ are each independently a hydrogen atom, an alkyl group having 1 to 4 carbon atoms, an alkanol group having 1 to 4 carbon atoms, or a structure represented by the formula (2-1) or (2-2) shown below, and at least one of $L_1$ to $L_5$ is a structure represented by the formula (2-1) or (2-2). Examples of the alkyl group having 1 to 4 carbon atoms include methyl, ethyl, n-propyl, iso-propyl, n-butyl, iso-butyl, sec-butyl, and tert-butyl groups. The alkyl group having 1 to 4 carbon atoms is preferably at least one of a methyl, ethyl, n-propyl, and n-butyl group. Examples of the alkanol group having 1 to 4 carbon atoms include hydroxymethyl, hydroxyethyl, 3-hydroxypropyl, and 4-hydroxybutyl groups. The term "alkanol group" as used herein refers to a structure resulting from substitution of a hydroxyl group for at least one hydrogen atom of an alkyl group. Preferably, $L_1$ to $L_5$ are each independently a hydrogen atom or a structure represented by the formula (2-1), and any one of $L_1$ to $L_5$ is a structure represented by the formula (2-1). In the first structural unit represented by the formula (1), the structure represented by the formula (2-1) or (2-2) may be present at any of the ortho-, meta-, and para-positions and is more preferably present at the para-position.

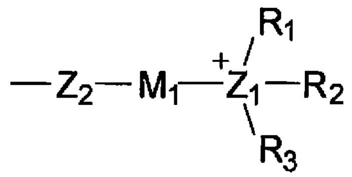

(2-1)

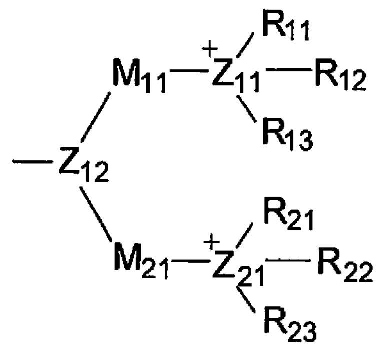

(2-2)

In the formulae (2-1) and (2-2), $R_1$ to $R_3$, $R_{11}$ to $R_{13}$, and $R_{21}$ to $R_{23}$ are each independently an alkyl group having 1 to 8 carbon atoms or an alkanol group having 1 to 8 carbon atoms. Preferably, $R_1$ to $R_3$, $R_{11}$ to $R_{13}$, and $R_{21}$ to $R_{23}$ are each independently an alkyl group having 1 to 6 carbon atoms or an alkanol group having 1 to 6 carbon atoms. More preferably, $R_1$ to $R_3$, $R_{11}$ to $R_{13}$, and $R_{21}$ to $R_{23}$ are each independently an alkyl group having 1 to 4 carbon atoms or an alkanol group having 1 to 4 carbon atoms. Examples of the alkyl group having 1 to 8 carbon atoms include the above-mentioned alkyl groups having 1 to 4 carbon atoms and further include 1-methylbutyl, n-pentyl, n-hexyl, n-heptyl, and n-octyl groups. Examples of the alkanol group having 1 to 8 carbon atoms include the above-mentioned alkanol groups having 1 to 4 carbon atoms and further include 5-hydroxypentyl, 6-hydroxyhexyl, 7-hydroxyheptyl, and 8-hydroxyoctyl groups.

$M_1$, $M_{11}$, and $M_{21}$ each independently have a linear hydrocarbon chain having 3 to 8 carbon atoms and optionally having a substituent replacing a hydrogen atom. $M_1$, $M_{11}$, and $M_{21}$ may each independently be an alkylene group having 3 to 8 carbon atoms and optionally having a substituent replacing a hydrogen atom. The number of carbon atoms constituting the hydrocarbon chain is preferably 3 to 6. More preferably, $M_1$, $M_{11}$, and $M_{21}$ are each independently an alkylene group having 3 to 6 carbon atoms. The substituent replacing a hydrogen atom is at least one selected from the group consisting of a halogen atom and an alkyl group having 1 to 5 carbon atoms. The halogen atom is, for example, a chlorine, bromine, or iodine atom. Examples of the alkyl group having 1 to 5 carbon atoms include methyl, ethyl, n-propyl, iso-propyl, n-butyl, iso-butyl, sec-butyl, tert-butyl, n-pentyl, 1-methylbutyl, 2-methylbutyl, 3-methylbutyl, 1,1-dimethylpropyl, 1,2-dimethylpropyl, and 2,2-dimethylpropyl groups. The substituent is preferably a methyl group and/or an ethyl group. When the hydrocarbon chain has a plurality of substituents, the substituents may be the same as or different from each other.

$Z_1$, $Z_{11}$, and $Z_{21}$ are each independently a nitrogen atom or a phosphorus atom. $Z_1$, $Z_{11}$, and $Z_{21}$ are preferably each a nitrogen atom.

$Z_2$ is a nitrogen atom bonded to one hydrogen atom (NH), an oxygen atom (O), or a sulfur atom (S). $Z_2$ is preferably an oxygen atom. $Z_{12}$ is a nitrogen atom (N).

$L_6$ is a hydrogen atom, a methyl group, or an ethyl group. $L_6$ is preferably a hydrogen atom.

Common anion-exchange membranes have a structure such as a benzyltrialkylammonium structure in which

an anion-exchange group is bonded to a benzene ring via a carbon atom at the benzylic position. By contrast, in the structural unit of formula (1) contained in the graft chain included in the anion-exchange membrane according to the present embodiment, an anion-exchange group is bonded to the benzene ring via a hydrocarbon chain denoted by $M_1$, Mn, or $M_{21}$ (such as an alkylene group) which optionally has a substituent replacing a hydrogen atom and via a heteroatom denoted by $Z_2$ or $Z_{12}$ (such as an oxygen atom). The anion-exchange membrane according to the present embodiment has a heteroatom denoted by $Z_2$ or $Z_{12}$ which is bonded to the benzene ring, and the anion-exchange group is bonded to the benzene ring via an ether structure containing the heteroatom, a thioether structure, or an amine structure. The anion-exchange membrane according to the present embodiment is devoid of a benzyltrialkylammonium structure which is prone to undergo nucleophilic substitution reaction involving hydroxide ions. Even in an alkali environment, therefore, the anion-exchange group is less likely to be eliminated from the structural unit contained in the anion-exchange membrane according to the present embodiment. The anion-exchange membrane according to the present embodiment which includes a graft chain containing this structural unit is less likely to suffer elimination of the anion-exchange group and has high alkali resistance.

A specific example of the first structural unit is a structure represented by formula (9) shown below. In the formula (9), n is preferably an integer of 3 to 8 and more preferably an integer of 3 to 6. $R_1$ to $R_3$ are bonded directly to the nitrogen. Preferably, $R_1$ to $R_3$ are each independently an alkyl group having 1 to 4 carbon atoms or an alkanol group having 1 to 4 carbon atoms. A preferred example of the first structural unit is a structure of the formula (9) in which $R_1$ and $R_2$ are each a methyl group, $R_3$ is a butyl group, and n is 4.

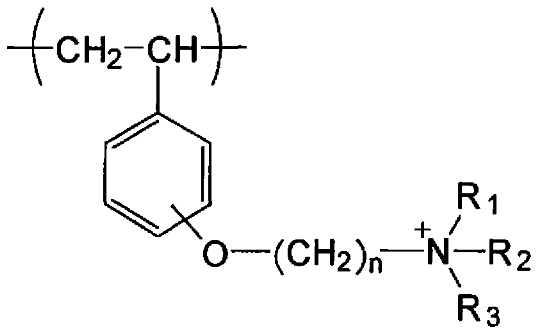

(9)

An anion $Y_2$ (counter ion) of the anion-exchange membrane according to the present embodiment is, for example, a hydroxide, carbonate, bicarbonate, or halide ion. Examples of the halide ion include fluoride, chloride, bromide, and iodide ions.

(Method for producing anion-exchange membrane)

An exemplary method suitable for producing the anion-exchange membrane according to the present embodiment will now be described. This production method includes a step (iv) of forming a structural unit represented by the formula (1) from a structural unit represented by formula (6) using a grafted membrane B including a substrate composed of a film of ultrahigh molecular weight polyolefin and a graft chain introduced in the substrate, the graft chain having the structural unit represented by the formula (6).

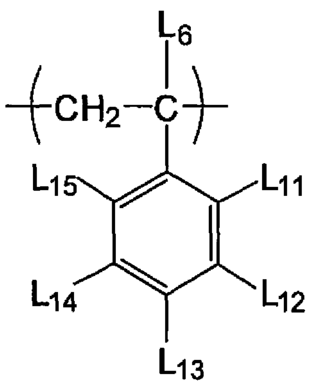

(6)

In the formula (6), $L_{11}$ to $L_{15}$ are each independently a hydrogen atom, an alkyl group having 1 to 4 carbon

atoms, an alkanol group having 1 to 4 carbon atoms, $NH_2$, OH, or SH, and at least one of $L_{11}$ to $L_{15}$ is at least one selected from the group consisting of $NH_2$, OH, and SH. The alkyl group having 1 to 4 carbon atoms and the alkanol group having 1 to 4 carbon atoms are as previously described and will therefore not be described again. Preferably, $L_{11}$ to $L_{15}$ are each independently a hydrogen atom, $NH_2$, OH, or SH, and any one of $L_{11}$ to $L_{15}$ is at least one selected from the group consisting of $NH_2$, OH, and SH. More preferably, $L_{11}$ to $L_{15}$ are each independently a hydrogen atom or OH, and any one of $L_{11}$ to $L_{15}$ is OH.

The step (iv) includes a step (iv-a) of reacting a structural unit represented by the formula (6) with a compound represented by formula (3) shown below to produce a copolymer having a structural unit represented by the formula (1) or a step (iv-b) of reacting a structural unit represented by the formula (6) with a compound represented by formula (4) shown below and subsequently reacting the resulting reaction product with a compound represented by formula (5) shown below to form a structural unit represented by the formula (1). $R_1$ to $R_3$, $M_1$, and $Z_1$ are as previously described above and will therefore not be described again. $X_1$ to $X_3$ are each independently a chlorine, bromine, or iodine atom, and $Y_1$ is a hydroxide, carbonate, bicarbonate, or halide ion.

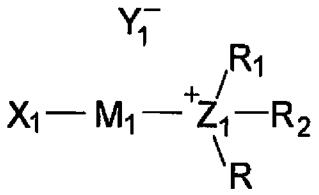

(3)

$X_2$- $M_1$- $X_3$ (4)

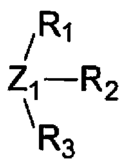

(5)

When any one of $L_{11}$ to $L_{15}$ is $NH_2$, the proportions of the structure of the formula (2-1) and the structure of the formula (2-2) to be obtained can be adjusted depending on the ratio of the number of moles of the compound represented by the formula (3) to the number of moles of nitrogen contained in the structural unit represented by the formula (6). For example, when the above ratio between the numbers of moles is in the range of 1.1 to 2.0 in the step (iii-a), a reaction product having a high proportion of the structure represented by the formula (2-1) is obtained. Similarly, in the step (iii-b), the proportions of the structure of the formula (2-1) and the structure of the formula (2-2) to be obtained can be adjusted depending on the ratio of the number of moles of the compound represented by the formula (4) to the number of moles of nitrogen contained in the structural unit represented by the formula (6).

In an example of the step (iv), a structural unit represented by formula (14) is formed from a structural unit represented by formula (10) using a grafted membrane B including a substrate composed of a film of ultrahigh molecular weight polyolefin and a graft chain introduced in the substrate, the graft chain having the structural unit represented by the formula (10). The step (iv-a) is, for example, a step of reacting a structural unit represented by the formula (10) with a haloalkyltrialkylammonium represented by formula (11) shown below to produce a copolymer having a structural unit represented by formula (12). The step (iv-b) is, for example, a step of reacting a structural unit represented by the formula (10) with a dihaloalkane represented by the formula (12) shown below and subsequently reacting the resulting reaction product with a trialkylamine represented by formula (13) shown below to produce a structural unit represented by the formula (14). $R_1$ to $R_3$, n, $X_1$ to $X_3$, and $Y_1$ are as previously described.

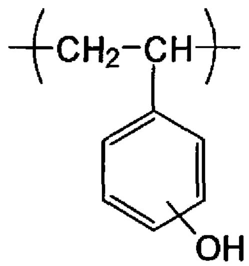

(10)

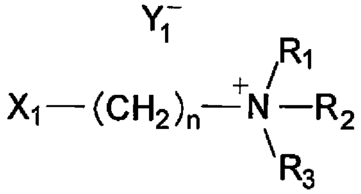

(11)

$X_2$-$(CH_2)_n$-$X_3$ (12)

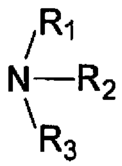

(13)

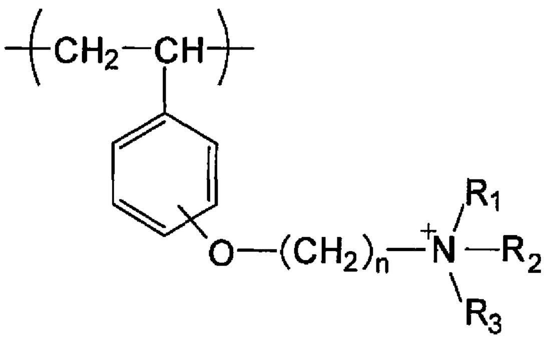

(14)

The term "haloalkyltrialkylammonium" as used herein refers to a compound represented by the formula (11). Specific examples of the haloalkyltrialkylammonium include halopropyltrimethylammonium, halobutyltrimethylammonium, halopentyltrimethylammonium, halohexyltrimethylammonium, halopropylethyldimethylammonium, halobutylethyldimethylammonium, halopentylethyldimethylammonium, halohexylethyldimethylammonium, halopropyldimethylpropylammonium, halobutyldimethylpropylammonium, halopentyldimethylpropylammonium, halohexyldimethylpropylammonium, halopropyldimethylbutylammonium, halobutyldimethylbutylammonium, halopentyldimethylbutylammonium, halohexyldimethylbutylammonium, halopropyldiethylmethylammonium, halobutyldiethylmethylammonium, halopentyldiethylmethylammonium, halohexyldiethylmethylammonium, halopropylethylmethylpropylammonium, halobutylethylmethylpropylammonium, halopentylethylmethylpropylammonium, halohexylethylmethylpropylammonium, halopropylbutylethylmethylammonium, halobutylbutylethylmethylammonium, halopentylbutylethylmethylammonium, halohexylbutylethylmethylammonium, halopropylmethyldipropylammonium, halobutylmethyldipropylammonium, halopentylmethyldipropylammonium, halohexylmethyldipropylammonium, halopropylmethylbutylpropylammonium, halobutylmethylbutylpropylammonium, halopentylmethylbutylpropylammonium, halohexylmethylbutylpropylammonium, halopropylmethyldibutylammonium, halobutylmethyldibutylammonium, halopentylmethyldibutylammonium, halohexylmethyldibutylammonium, halopropyltriethylammonium, halobutyltriethylammonium, halopentyltriethylammonium, halohexyltriethylammonium, halopropyldiethylpropylammonium, halobutyldiethylpropylammonium, halopentyldiethylpropylammonium, halohexyldiethylpropylammonium, halopropyldiethylbutylammonium, halobutyldiethylbutylammonium, halopentyldiethylbutylammonium, halohexyldiethylbutylammonium, halopropylethyldipropylammonium,

halobutylethyldipropylammonium, halopentylethyldipropylammonium, halohexylethyldipropylammonium, halopropylbutylethylpropylammonium, halobutylbutylethylpropylammonium, halopentylbutylethylpropylammonium, halohexylbutylethylpropylammonium, halopropyldibutylethylammonium, halobutyldibutylethylammonium, halopentyldibutylethylammonium, halohexyldibutylethylammonium, halopropyltripropylammonium, halobutyltripropylammonium, halopentyltripropylammonium, halohexyltripropylammonium, halopropylbutyldipropylammonium, halobutylbutyldipropylammonium, halopentylbutyldipropylammonium, halohexylbutyldipropylammonium, halopropyldibutylpropylammonium, halobutyldibutylpropylammonium, halopentyldibutylpropylammonium, halohexyldibutylpropylammonium, halopropyltributylammonium, halobutyltributylammonium, halopentyltributylammonium, and halohexyltributylammonium.

The haloalkyltrialkylammonium can be obtained by a reaction between a dihaloalkane represented by the formula (12) and a trialkylamine represented by the formula (13). For example, the haloalkyltrialkylammonium can be obtained by mixing a dihaloalkane represented by the formula (12) and a trialkylamine represented by the formula (13) in a solvent such as diethyl ether.

The reaction which gives a haloalkyltrialkylammonium represented by the formula (11) can be carried out, for example, by mixing a dihaloalkane represented by the formula (12) and a trialkylamine represented by the formula (13) in a solvent such as diethyl ether. This reaction can be carried out, for example, at 0 to 50°C, in particular at 20 to 30°C.

The dihaloalkane represented by the formula (12) and the trialkylamine represented by the formula (13), which are used in the step (iv-b), can respectively be a dihaloalkane and a trialkylamine that react with each other to give a haloalkyltrialkylammonium as described above. The step (iv-b) can be accomplished by a sequential reaction consisting of reacting the structural unit represented by the formula (10) with the dihaloalkane represented by the formula (12) and subsequently reacting the resulting reaction product with the trialkylamine represented by the formula (13). If desired, the product of the reaction between the structural unit represented by the formula (10) and the dihaloalkane represented by the formula (12) may be isolated before the subsequent reaction. These reactions in the step (iv-b) can be carried out, for example, at 10 to 80°C.

With the use of the method for producing an anion-exchange membrane according to the present embodiment, an anion-exchange membrane can be produced easily and efficiently. Additionally, the method for producing an anion-exchange membrane according to the present embodiment can avoid the use of a reagent harmful to the human body, such as chloromethyl methyl ether or methyl iodide, and allows production of an anion-exchange membrane by easy operation.

The method for producing an anion-exchange membrane according to the present embodiment preferably further includes:

a step (i) of exposing a substrate composed of a film of ultrahigh molecular weight polyolefin to radiation;
a step (ii) of graft-polymerizing a monomer represented by formula (7) to the substrate exposed to radiation and thereby forming a grafted membrane A; and
a step (iii) of hydrolyzing the grafted membrane A to form a grafted membrane B.

The steps (i), (ii), and (iii) are preferably performed before the step (iv).

In the formula (7), $L_{21}$ to $L_{25}$ are each independently a hydrogen atom, an alkyl group having 1 to 4 carbon atoms, an alkanol group having 1 to 4 carbon atoms, or a structure represented by formula (8-1) or (8-2) shown below, and at least one of $L_{21}$ to $L_{25}$ is a structure represented by the formula (8-1) or (8-2) shown below. More preferably, $L_{21}$ to $L_{25}$ are each independently a hydrogen atom or a structure represented by the formula (8-1) shown below, and $Z_2$ in the structure represented by the formula (8-1) is an oxygen atom. The structure represented by the formula (8-1) or (8-2) may be present at any of the ortho-, meta-, and para-positions of the benzene ring and is more preferably present at the para-position. $R_4$, $R_{14}$, and $R_{24}$ are each independently a hydrogen atom, a methyl group, or an ethyl group. The alkyl group having 1 to 4 carbon atoms, the alkanol group having 1 to 4 carbon atoms, $L_6$, and $Z_2$ are as previously described and will therefore not be described again.

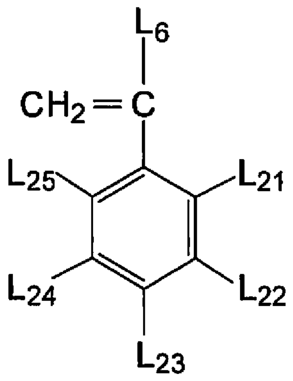

(7)

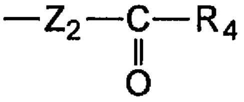

(8-1)

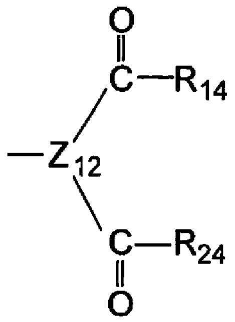

(8-2)

The step (i) will now be described. In the step (i), a substrate composed of a film of ultrahigh molecular weight polyolefin is exposed to radiation. The ultrahigh molecular weight polyolefin and skived film (film made by skiving) of ultrahigh molecular weight polyolefin are as previously described. The skived film of ultrahigh molecular weight polyolefin can be prepared, for example, by forming a block of ultrahigh molecular weight polyolefin and then skiving the block. Specific procedures of the preparation of the film may be the same as those employed in known methods. Alternatively, a commercially-available skived film may be used.

The skived film of ultrahigh molecular weight polyolefin, which is a type of ultrahigh molecular weight polyolefin film, has a more uniform thickness and a more random crystal structure (in other words, less anisotropic or more isotropic crystal structure) than films produced by other methods such as inflation and common polyolefin films such as those composed of HDPE or LDPE. Thus, the use of the skived film of ultrahigh molecular weight polyolefin as a substrate of an anion-exchange membrane and a MEA makes it possible to achieve desired alkali resistance, mechanical strength, dimensional stability, and fuel blocking performance of the anion-exchange membrane and the MEA while reducing the thickness of the substrate. The reduced thickness of the substrate can also contribute to improvement in anionic conductivity and water permeability. The thickness of the substrate can be reduced, for example, to 50 $\mu$m or less. In terms of the water permeability and the balance between anionic conductivity and fuel blocking performance, the thickness of the substrate is preferably 50 $\mu$m or less and more preferably 30 $\mu$m or less. The lower limit of the thickness of the substrate is not particularly defined and is, for example, 10 $\mu$m. An excessively reduced thickness of the substrate causes the anion-exchange membrane and MEA to have insufficient strength, leading to an increase in the likelihood that the MEA is damaged during operation of a PEFC including the MEA.

The substrate film to be exposed to radiation may contain a resin other than ultrahigh molecular weight polyolefin and/or a low molecular weight compound, as long as the effect of the present embodiment is obtained.

The radiation applied to the substrate in the step (i) is, for example, ionizing radiation such as $\alpha$-radiation, $\beta$-radiation, $\gamma$-radiation, electron radiation, or ultraviolet radiation, and is preferably $\gamma$-radiation or electron radiation. The radiation dose is not particularly limited. For example, the radiation dose is 1 kGy to 400 kGy and preferably 10 kGy to 300 kGy. When the radiation dose is 1 kGy or more, the graft ratio to be achieved in the subsequent step (ii) is prevented from being excessively low. When the radiation dose is 400 kGy or less, excessive polymerization is prevented in the subsequent step (ii), or degradation of the substrate is prevented in the step (i).

The substrate exposed to radiation may be stored at a low temperature (for example, -30°C or lower) before the subsequent step (ii).

The step (ii) will next be described. In the step (ii), a monomer represented by the formula (7) is graft-polymerized to the substrate exposed to radiation in the step (i), and thereby a grafted membrane A is formed. The monomer represented by the formula (7) is as previously described and will therefore not be described again.

The step (ii) is carried out, for example, in a solid-liquid two phase system. Specifically, for example, the substrate (solid phase) exposed to radiation is brought into contact with a solution (liquid phase) containing the monomer to allow graft polymerization to proceed. The contact can be made, for example, by immersing the substrate in the solution. To prevent inhibition of the reaction by the presence of oxygen, it is preferable to perform the step (ii) in an atmosphere whose oxygen concentration is reduced as much as possible. To this end, for example, the monomer-containing solution may be bubbled with a gas such as nitrogen.

As the solvent of the monomer-containing solution (polymerization solution) there is selected a solvent that dissolves the monomer but does not dissolve the substrate. The solvent may be selected depending on the ability to dissolve the monomer and substrate. Examples of usable solvents include: aromatic hydrocarbons such as benzene, toluene, and xylene; and aromatic compounds typified by phenolic compounds such as phenol and cresol. The use of an aromatic compound as the solvent tends to increase the resulting graft ratio. Additionally, an aromatic compound can dissolve a polymer that is formed as a by-product and not grafted to the substrate (present in a free form independently of the substrate) and thus allows the solution to remain homogeneous. The solvent may be a mixture of two or more solvents. When the monomer is liquid at the temperature of graft polymerization, the graft polymerization may be carried out without using any solvent.

The concentration of the monomer in the polymerization solution can be varied depending on the polymerizability of the monomer and the desired graft ratio and is preferably 20 wt% or more. When the concentration of the monomer in the polymerization solution is 20 wt% or more, the grafting reaction can be allowed to proceed satisfactorily.

The graft polymerization in the step (ii) is preferably carried out in such a manner that the weight (dry weight) of the grafted membrane A resulting from the graft polymerization will be about 1.1 to 3.5 times the weight (dry weight) of the substrate that has yet to undergo the polymerization. The amount of weight increase is more preferably in the range of 1.4 to 3.3 times and particularly preferably in the range of 1.6 to 3.0 times. If the amount of weight increase is excessively small, this may be due to a failure to introduce a sufficient amount of graft component to obtain an anion-exchange membrane. If the amount of weight increase is excessively small (less than 1.1 times, for example), the resulting anion-exchange membrane may have low ionic conductivity. This is not preferred particularly when the anion-exchange membrane is to be used in a fuel cell. If the amount of weight increase is excessively large, the resulting anion-exchange membrane and a MEA including the anion-exchange membrane may have low strength.

A specific example of the step (ii) is as follows. The monomer-containing solution is placed in a container made of glass or stainless steel. Next, the solution is degassed under reduced pressure or bubbled with an inert gas such as nitrogen gas to remove the dissolved oxygen which can inhibit graft polymerization. Subsequently, the substrate exposed to radiation is placed in the solution to allow graft polymerization to take place. As a result of the graft polymerization, a graft chain containing a structural unit derived from the monomer is added to the ultrahigh molecular weight polyolefin forming the substrate. The graft polymerization time is, for example, about 10 minutes to 12 hours, and the reaction temperature is, for example, 0 to 100°C (preferably 40 to 80°C). After the graft polymerization, the substrate is taken out of the solution. Next, to remove the solvent, the monomer remaining unreacted, and a polymer present in a free form independently of the substrate, the substrate taken out of the solution is washed (typically 3 to 6 times) with an appropriate amount of solvent and then dried. As the solvent for washing there is selected a solvent that dissolves the monomer and free polymer but does not dissolve the substrate or graft chain resulting from the graft polymerization. The solvent used can be, for example, toluene, xylene, or acetone.

The step (iii) will next be described. In the step (iii), the grafted membrane A obtained in the step (ii) is hydrolyzed to form a grafted membrane B.

The step (iii) can be accomplished by immersing the grafted membrane A in a solvent containing an alkaline agent. The alkaline agent used can be, for example, potassium hydroxide or sodium hydroxide. The solvent used can be, for example, methanol, ethanol, or acetone. One of these solvents may be used alone, or two or more of these solvents may be used in combination.

Examples of the steps (ii) and (iii) are as follows. In the step (ii), for example, a monomer represented by formula (15) is graft-polymerized to the substrate to form a grafted membrane A. In the step (iii), the grafted membrane A is hydrolyzed to form a grafted membrane B having a graft chain containing a structural unit represented by the formula (10).

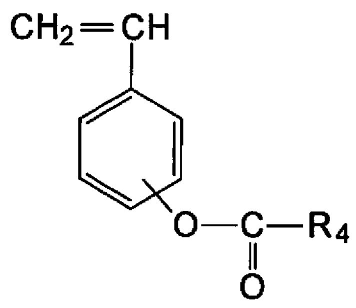

(15)

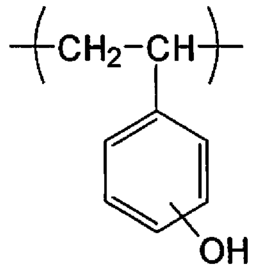

(10)

In the monomer represented by the formula (15), the functional group [-O-C(=O)-$R_4$] bonded to the phenyl group may be present at any of the ortho-, meta-, and para-positions and is more preferably present at the para-position. Examples of the monomer represented by the formula (15) include vinylphenyl acylates such as vinylphenyl formate, vinylphenyl acetate, and vinylphenyl propionate.

(Electrochemical element)

An electrochemical element according to the present embodiment includes the anion-exchange membrane according to the present embodiment and an electrode disposed on a surface of the anion-exchange membrane. The electrochemical element according to the present embodiment includes an anode, a cathode, and the anion-exchange membrane according to the present embodiment, and the anion-exchange membrane according to the present embodiment is sandwiched between the anode and the cathode. An example of the electrochemical element according to the present embodiment is a MEA. The anion-exchange membrane according to the present embodiment is as previously described and will therefore not be described again.

In a MEA including the anion-exchange membrane according to the present embodiment, an electrode is disposed on a surface of the anion-exchange membrane. Typically, the anion-exchange membrane and the electrode are assembled together by a technique such as hot press. In general, the electrode includes an electrode pair consisting of an anode and a cathode which are respectively disposed on the two principal surfaces of the anion-exchange membrane. FIG. 1 shows an example of the MEA including the anion-exchange membrane according to the present embodiment. The MEA 1 shown in FIG. 1 includes an anion-exchange membrane 2, an anode 3, and a cathode 4. The anode 3 is disposed on one principal surface of the anion-exchange membrane 2, while the cathode 4 is disposed on the other principal surface of the anion-exchange membrane 2.

The catalysts used in the electrodes can be those which are included in known MEAs for use in PEFCs. The catalysts, unlike catalysts in cation-exchange PEFCs, need not be a noble metal such as platinum, and can be a base metal such as nickel, cobalt, iron, or silver. The catalyst and other substances contained in the anode of the MEA and those contained in the cathode of the MEA may be the same as or different from each other.

(Electrochemical device)

An electrochemical device according to the present embodiment includes the electrochemical element according to the present embodiment. The electrochemical element according to the present embodiment is as previously described and will therefore not be described again. An example of the electrochemical device according to the present embodiment is a PEFC. The PEFC is preferably an anion-exchange fuel cell. The PEFC according to the present embodiment includes the MEA according to the present embodiment, which allows the PEFC to have improved performance. For example, the PEFC can have high durability by virtue of the fact that the anion-exchange membrane included in the MEA has high alkali resistance, high mechanical strength, and high dimensional stability. Additionally, the PEFC can have superior output characteristics by virtue of the fact that the anion-exchange membrane included in the MEA has high anionic

conductivity and high fuel blocking performance and has a good balance between anionic conductivity and fuel blocking performance. Conventionally known products can be used as the components other than the MEA without particular limitation.

FIG. 2 shows an example of the PEFC according to the present embodiment. The PEFC 11 shown in FIG. 2 includes an anion-exchange membrane 2, a pair of electrodes (an anode 3 and a cathode 4) disposed to sandwich the anion-exchange membrane 2, and a pair of separators (an anode separator 5 and a cathode separator 6) disposed to sandwich the pair of electrodes, and these components are joined together by a pressure applied in a direction perpendicular to the principal surfaces of the components. The anion-exchange membrane 2 and the electrodes 3 and 4 form a MEA 1.

The PEFC according to the present embodiment is an anion-exchange fuel cell. A fuel is supplied to the anode, and an oxidant is supplied to the cathode. The fuel is, for example, an alkaline fuel containing an alcohol or hydrazine (hydrate). A fuel containing hydrazine (hydrate) is preferred, since hydrazine is highly reactive and, according to the electricity generation principle, does not produce $CO_2$. The oxidant is, for example, air.

The PEFC according to the present embodiment can include components other than the MEA according to the present embodiment, and the other components may be those known as components of PEFCs. Examples of the other components which can be included in the PEFC to be configured as a fuel cell element include a gas diffusion layer and a separator. Examples of the other components which can be included in the PEFC to be configured as a fuel cell system include a fuel feeder, an oxidant feeder, a humidifier, a current collecting plate, and components for detecting the state of electricity generation such as a temperature sensor, an oxygen sensor, a flow meter, and a humidity sensor. The PEFC can be produced by a known method.

EXAMPLES

Hereinafter, examples of the present invention and comparative examples will be described. The present invention is not limited to the examples. The experiments and measurements described below were performed at 60°C, unless otherwise stated. The term "room temperature" as used in the following description refers to a temperature of 23°C.

In Examples and Comparative Examples, various evaluations were carried out as described below.

[Graft ratio]

The graft ratio was calculated by the following equation.

$$\text{Graft ratio (\%)} = 100 \times (W_1 - W_0)/W_0$$

$W_0$ is the dry weight (g) of the substrate not subjected to graft polymerization, and $W_1$ is the dry weight (g) of the membrane resulting from graft polymerization. The "dry" weight refers to the weight of the substrate or membrane as determined after the substrate or membrane was placed at 60°C for 1 hour or more and stopped showing any change in weight.

[Ion-exchange capacity]

The anion-exchange membrane produced was cut to prepare a test specimen for ion-exchange capacity measurement. The prepared test specimen was immersed in a 3 mol/L (23°C) aqueous solution of sodium chloride for 10 hours or more to change the counter anions of the anion-exchange membrane to chloride ions. After that, the anion-exchange membrane was immersed in a 1 mol/L aqueous solution of sodium nitrate ($NaNO_3$) for 12 hours or more. The liberated chloride ions were titrated with a 0.05 mol/L aqueous solution of silver nitrate ($AgNO_3$) to measure the ion-exchange capacity.

[Ionic conductivity (anionic conductivity)]

First, the anion-exchange membrane produced was cut to prepare a test specimen with a size of 20 mm × 30 mm, and the prepared test specimen was immersed in water at 30°C for 2 hours or more and thus swollen. Next, the test specimen was immersed in water at 60°C for 5 minutes, after which a pair of platinum foil electrodes (each having a width of 10 mm) were placed on one principal surface of the swollen membrane. The membrane with the electrodes was used as a measurement cell. The two platinum electrodes were spaced at a distance of 10 mm from each other.

Next, the measurement cell was placed in water at 60°C, and the impedance between the platinum foil electrodes

was measured with a chemical impedance meter (manufactured by HIOKI E.E. CORPORATION under the product code 3532-80). The measurement frequency range was from 10 kHz to 1 MHz. The real part of the measured impedance was plotted on the abscissa, and the imaginary part of the measured impedance was plotted on the ordinate. The real part of a minimum value was employed as a membrane resistance R [Ω]. The ionic conductivity σ [S/cm] of the anion-exchange membrane was determined by the following equation, where t denotes the thickness [μm] of the swollen test specimen, h denotes the width [cm] of the test specimen, and L denotes the distance [cm] between the platinum foil electrodes.

$$\text{Ionic conductivity } \sigma = L/(R \times t \times h \times 10^{-4}) \text{ [S/cm]}$$

Next, the ionic conductivity σ thus calculated was divided by the thickness t of the test specimen to determine a conductance C (= σ/(t × $10^{-4}$) [S/$cm^2$]) which represents an ionic conductivity corrected for thickness variation.

[Measurement of hydrazine permeability coefficient]

First, the anion-exchange membrane produced was cut to prepare a test specimen with a size of 50 mm × 50 mm, and the prepared test specimen was immersed in a 1 mol/L aqueous solution of potassium hydroxide (KOH) for 12 hours or more. After the immersion, the test specimen was inserted between two T-shaped cells, which were connected together to form an H-shape. The test specimen was thus located at the center of the horizontal line of the H shape. The portion of the anion-exchange membrane lying in the connection portion between the cells had an area of 7.07 $cm^2$. Next, one of the cells opposed across the anion-exchange membrane was charged with 180 mL of water, while the other cell was charged with 180 mL of a fuel (an aqueous solution containing 10 wt% of hydrazine hydrate and 4.19 wt% of KOH). After that, the cells were immediately placed in a water bath at 30°C, and the liquids in the cells were stirred. A volume of 2 mL of a solution was sampled from the cell initially charged with water at predetermined time intervals after the start of the stirring (reference time point). Meanwhile, 2 mL of a solution was sampled also from the cell charged with the fuel at the same time intervals to keep the liquid levels of the two cells equal to each other so that the amount of permeation would be prevented from fluctuating or varying due to a pressure difference caused by a difference in liquid level. The solution sampled from the cell charged with water was diluted, and the diluted solution was titrated with a 0.05 N aqueous hydrochloric acid solution using an automatic potentiometric titrator (AT-510, manufactured by Kyoto Electronics Manufacturing Co., Ltd.) to determine the hydrazine content in the solution. The amount of hydrazine passing through the anion-exchange membrane was calculated from the determined hydrazine content, and the hydrazine permeability coefficient of the anion-exchange membrane [mmol/(m • hr)] was calculated from the change in the amount of hydrazine permeation per unit membrane area and unit time. The amount of hydrazine permeation was determined by examining the hydrazine content at every time interval in the manner described above and performing calculation based on the change in hydrazine content over time (specifically, based on the slope of a graph created by plotting the elapsed time from the reference time point to the sampling of the solution on the abscissa and plotting the hydrazine content determined at each sampling of the solution on the ordinate).

[Evaluation of alkali resistance]

The alkali resistance of each of the anion-exchange membranes obtained in Examples and Comparative Examples was evaluated as follows.

Each anion-exchange membrane produced was cut to prepare test specimens for ion-exchange capacity measurement. The chloride ion content of each test specimen as prepared was measured as "chloride ion content before test".

An aqueous solution containing 10 wt% of hydrazine hydrate and 1 mol/L (1M) of KOH and an aqueous solution containing 10 wt% of hydrazine hydrate and 5 mol/L (5M) of KOH were prepared. The temperatures of the aqueous solutions were maintained at 80°C. The test specimens were respectively immersed in the aqueous solutions. After a predetermined time, the test specimens were taken out of the solutions, and then the chloride ion content of each test specimen was measured. The measured value was employed as "chloride ion content after test".

The ratio of the chloride ion content after test to the chloride ion content before test (chloride ion content after test/chloride ion content before test) was determined as a functional group retention (%), which was used as an index for alkali resistance evaluation.

The above measurement of the chloride ion content was conducted as follows. The test specimen was immersed in a 3 mol/L (23°C) aqueous solution of sodium chloride for 10 hours or more to change the counter anions of the anion-exchange membrane to chloride ions. After that, the anion-exchange membrane was immersed in a 1 mol/L aqueous solution of sodium nitrate ($NaNO_3$) for 12 hours or more. The liberated chloride ions were titrated with a 0.05 mol/L

aqueous solution of silver nitrate ($AgNO_3$).

[Evaluation of amount of area change (%)]

The anion-exchange membrane was cut to prepare a sample having a predetermined size, and the sample was allowed to stand at a temperature of 25°C and a relative humidity of 60% for 12 hours or more, after which the area So of the sample was measured. Next, this sample was immersed in pure water at 30°C for 2 hours or more to allow the sample to retain a sufficient amount of water, and then the area $S_1$ of the sample was measured. The amount of area change (%) corresponds to the ratio calculated by the following equation.

$$\text{Amount of area change (\%)} = [(S_1 - S_0)/S_0] \times 100$$

(Synthesis Example 1)

An ultrahigh molecular weight polyethylene powder (HI-ZEX MILLION 240M, manufactured by Mitsui Chemicals, Inc.) was charged into a mold, and compressed and preformed by applying a pressure of 100 kg/$cm^2$ at 25°C for 10 minutes. The pressure was then reduced to 30 kg/$cm^2$, while the temperature was increased to 210°C. This state was maintained for 120 minutes to melt the ultrahigh molecular weight polyethylene powder. Next, the pressure was increased up to 100 kg/$cm^2$, and the temperature was gradually decreased to room temperature over 120 minutes during which the pressure was maintained at 100 kg/$cm^2$. After that, the resulting ultrahigh molecular weight polyethylene product was removed from the mold. Thus, a cylindrical molded product was obtained as a sintered block having an outer diameter of 80 mm, an inner diameter of 40 mm, and a length of 80 mm. Next, the molded product was spirally cut to obtain a 25-μm-thick skived film. This film was used as a sample for GPC measurement, by which the weight-average molecular weight Mw was determined to be 1,540,000. This film is referred to as "substrate No. 1".

The substrate No. 1 was exposed to electron radiation in a nitrogen atmosphere. The exposure to electron radiation was carried out at room temperature. The electron radiation was applied to one principal surface of the substrate at an accelerating voltage of 250 kV and a dose of 90 kGy. The electron-irradiated substrate is referred to as "substrate No. 2". This substrate No. 2 was cooled with dry ice to the temperature of the dry ice and then stored before the subsequent step.

(Synthesis Example 2)

A 50-μm-thick high-density polyethylene (HDPE) film (HD, manufactured by TAMAPOLY CO., LTD.) was exposed to electron radiation in a nitrogen atmosphere. The exposure to electron radiation was carried out at room temperature. The electron radiation was applied to one principal surface of the substrate at an accelerating voltage of 250 kV and a dose of 90 kGy. The electron-irradiated substrate is referred to as "substrate No. 3". This substrate No. 3 was cooled with dry ice to the temperature of the dry ice and then stored before the subsequent step.

(Example 1)

An amount of 550 g of 4-vinylphenyl acetate (VPAc) was prepared as a monomer and was bubbled with nitrogen gas to remove oxygen from the monomer. Any solvent was not used since VPAc is liquid at room temperature. This monomer liquid was heated to a temperature of 70°C. The substrate No. 2 was immersed in the liquid for 4 minutes during which the temperature of the liquid was maintained at 70°C, and thus graft polymerization was allowed to proceed. Next, the substrate subjected to graft polymerization was taken out of the polymerization solution and washed by immersion in toluene for 1 hour or more. The substrate was further washed with acetone for 30 minutes and then dried with a dryer at 60°C. The graft ratio of the resulting membrane was 68%.

Next, the grafted membrane obtained above was immersed in a methanol solution containing 1 mol/L of KOH at room temperature for 2 hours to cause saponification, giving a grafted membrane having a polyvinylphenol structure.

Next, the grafted membrane subjected to saponification was immersed in an aqueous solution containing 30 wt% of bromobutylbutyldimethylammonium bromide and 1 mol/L of KOH at room temperature for 12 hours. The grafted membrane treated with the aqueous KOH solution was washed by immersion in pure water for 1 hour or more. This washing was repeated several times. After that, the grafted membrane was immersed in a 1 mol/L aqueous KOH solution for 2 hours to allow the grafted membrane to undergo ion exchange. Subsequently, the grafted membrane was washed with pure water and then immersed in pure water, which was bubbled with carbon dioxide gas for 30 minutes. This gave an anion-exchange membrane having a quaternary ammonium salt group whose counter ion was carbonate ion.

(Example 2)

A membrane graft-polymerized with VPAc (graft ratio = 85%) was obtained in the same manner as in Example 1, except for changing the time of immersion of the substrate to 7 minutes. The subsequent steps including saponification were performed in the same manner as in Example 1 to obtain an anion-exchange membrane having a quaternary ammonium salt group whose counter ion was carbonate ion.

(Example 3)

A membrane graft-polymerized with VPAc (graft ratio = 133%) was obtained in the same manner as in Example 1, except for changing the time of immersion of the substrate to 11 minutes. The subsequent steps including saponification were performed in the same manner as in Example 1 to obtain an anion-exchange membrane having a quaternary ammonium salt group whose counter ion was carbonate ion.

(Example 4)

A membrane graft-polymerized with VPAc (graft ratio = 163%) was obtained in the same manner as in Example 1, except for changing the time of immersion of the substrate to 15 minutes. The subsequent steps including saponification were performed in the same manner as in Example 1 to obtain an anion-exchange membrane having a quaternary ammonium salt group whose counter ion was carbonate ion.

(Comparative Example 1)

An amount of 550 g of 4-(chloromethyl)styrene was prepared as a monomer. This monomer was bubbled with nitrogen gas to remove oxygen from the monomer. Any solvent was not used since 4-(chloromethyl)styrene is liquid at room temperature. This monomer liquid was heated to a temperature of 70°C. The substrate No. 2 was immersed in the liquid for 10 minutes during which the temperature of the liquid was maintained at 70°C, and thus graft polymerization was allowed to proceed. Next, the substrate subjected to graft polymerization was taken out of the polymerization solution and washed by immersion in toluene for 1 hour or more. The substrate was further washed with acetone for 30 minutes, and the washed membrane was then dried with a dryer at 60°C. The graft ratio of the grafted membrane dried was 66%.

The dried membrane was immersed in an ethanol solution of triethylamine (manufactured by Sigma-Aldrich Co., LLC., concentration = 30 wt%) at room temperature for 12 hours to quaternize the chloromethyl moiety of the grafted membrane. The grafted membrane subjected to the quaternization was washed with ethanol for 30 minutes and then washed with an ethanol solution containing 1 mol/L HCl for 30 minutes. After that, the membrane was further washed with pure water. The resulting membrane was immersed in a 1 mol/L aqueous KOH solution for 2 hours to allow ion exchange to take place. Subsequently, the membrane was washed with pure water and then immersed in pure water, which was bubbled with carbon dioxide gas for 30 minutes. This gave an anion-exchange membrane having a quaternary ammonium salt group whose counter ion was carbonate ion.

(Comparative Example 2)

A membrane graft-polymerized with 4-(chloromethyl)styrene (graft ratio = 86%) was obtained in the same manner as in Comparative Example 1, except for changing the time of immersion of the substrate to 14 minutes. The subsequent steps including quaternization were performed in the same manner as in Comparative Example 1 to obtain an anion-exchange membrane having a quaternary ammonium salt group whose counter ion was carbonate ion.

(Comparative Example 3)

A membrane graft-polymerized with 4-(chloromethyl)styrene (graft ratio = 100%) was obtained in the same manner as in Comparative Example 1, except for changing the time of immersion of the substrate to 30 minutes. The subsequent steps including quaternization were performed in the same manner as in Comparative Example 1 to obtain an anion-exchange membrane having a quaternary ammonium salt group whose counter ion was carbonate ion.

(Comparative Example 4)

An amount of 550 g of VPAc was prepared as a monomer and was bubbled with nitrogen gas to remove oxygen from the monomer. Any solvent was not used since VPAc is liquid at room temperature. This monomer liquid was heated to a temperature of 70°C. The substrate No. 3 was immersed in the liquid for 5 minutes during which the temperature

of the liquid was maintained at 70°C, and thus graft polymerization was allowed to proceed. Next, the substrate subjected to graft polymerization was taken out of the polymerization solution and washed by immersion in toluene for 1 hour or more. The substrate was further washed with acetone for 30 minutes and then dried with a dryer at 60°C. The graft ratio of the resulting membrane was 14%.

Next, the grafted membrane obtained above was immersed in a methanol solution containing 1 mol/L of KOH at room temperature for 2 hours to cause saponification, giving a grafted membrane having a polyvinylphenol structure.

Next, the grafted membrane subjected to saponification was immersed in an aqueous solution containing 30 wt% of bromobutylbutyldimethylammonium and 1 mol/L of KOH at room temperature for 12 hours. The grafted membrane treated with the aqueous KOH solution was washed by immersion in pure water for 1 hour or more. This washing was repeated several times. After that, the grafted membrane was immersed in a 1 mol/L aqueous KOH solution for 2 hours to allow the grafted membrane to undergo ion exchange. Subsequently, the grafted membrane was washed with pure water and then immersed in pure water, which was bubbled with carbon dioxide gas for 30 minutes. This gave an anion-exchange membrane having a quaternary ammonium salt group whose counter ion was carbonate ion.

(Comparative Example 5)

A membrane graft-polymerized with VPAc (graft ratio = 58%) was obtained in the same manner as in Comparative Example 4, except for changing the time of immersion of the substrate to 15 minutes. The subsequent steps including saponification were performed in the same manner as in Comparative Example 4 to obtain an anion-exchange membrane having a quaternary ammonium salt group whose counter ion was carbonate ion.

(Comparative Example 6)

A membrane graft-polymerized with VPAc (graft ratio = 77%) was obtained in the same manner as in Comparative Example 4, except for changing the time of immersion of the substrate to 60 minutes. The subsequent steps including saponification were performed in the same manner as in Comparative Example 4 to obtain an anion-exchange membrane having a quaternary ammonium salt group whose counter ion was carbonate ion.

(Comparative Example 7)

A membrane graft-polymerized with VPAc (graft ratio = 165%) was obtained in the same manner as in Comparative Example 4, except that the VPAc monomer liquid was heated to a temperature of 50°C and that the substrate No. 3 was immersed in the liquid for 960 minutes during which the temperature of the liquid was maintained at 50°C. The subsequent steps including saponification were performed in the same manner as in Comparative Example 4 to obtain an anion-exchange membrane having a quaternary ammonium salt group whose counter ion was carbonate ion.

Table 1 shows the graft ratio, the ion-exchange capacity, the amount of area change, the ionic conductivity, the hydrazine permeability coefficient, and the ratio of hydrazine permeability coefficient [mmol/m • hr] to ionic conductivity [mS/cm] for the anion-exchange membranes obtained in Examples and Comparative Examples. Table 2 shows the functional group retention for the anion-exchange membranes obtained in Example 4 and Comparative Example 3. The symbol "-" used in the column headed "Amount of area change" in Table 1 means that measurement was not conducted.

[Table 1]

| Sample | Graft ratio | Ion -exchange capacity (Initial value) | Amount of area change | Ionic conductivity | Hydrazine permeability coefficient | Ratio of hydrazine permeability coefficient [mmol/m• hr] to ionic conductivity [mS/cm] |
|---|---|---|---|---|---|---|
| | [%] | [mmeq/g] | [%] | [mS/cm] | [mmol/m• hr] | |
| Example 1 | 68 | 1.16 | 17 | 12.9 | 0.110 | 0.0085 |
| Example 2 | 85 | 1.58 | 21 | 14.8 | 0.318 | 0.021 |
| Example 3 | 133 | 1.73 | 26 | 17.1 | 0.337 | 0.020 |
| Example 4 | 163 | 1.87 | 29 | 20.8 | 0.505 | 0.024 |
| Comparative Example 1 | 66 | 1.78 | - | 18.2 | 0.362 | 0.020 |
| Comparative Example 2 | 86 | 2.01 | - | 20.3 | 0.446 | 0.022 |

(continued)

| Sample | Graft ratio | Ion -exchange capacity (Initial value) | Amount of area change | Ionic conductivity | Hydrazine permeability coefficient | Ratio of hydrazine permeability coefficient [mmol/m• hr] to ionic conductivity [mS/cm] |
|---|---|---|---|---|---|---|
| | [%] | [mmeq/g] | [%] | [mS/cm] | [mmol/m• hr] | |
| Comparative Example 3 | 100 | 2.22 | - | 22.6 | 0.555 | 0.025 |
| Comparative Example 4 | 14 | 0.00 | 0 | 0.8 | 0.000 | 0 |
| Comparative Example 5 | 58 | 1.25 | 20 | 10.4 | 0.287 | 0.028 |
| Comparative Example 6 | 77 | 1.42 | 25 | 12.2 | 0.410 | 0.034 |
| Comparative Example 7 | 165 | 1.89 | 54 | 24.7 | 1.003 | 0.041 |

[Table 2]

| Sample | Aqueous solution used as fuel (1M KOH) | | | Aqueous solution used as fuel (5M KOH) | | |
|---|---|---|---|---|---|---|
| | Functional group retention [%] | | | Functional group retention [%] | | |
| | 100 hours | 200 hours | 300 hours | 100 hours | 200 hours | 300 hours |
| Example 4 | 98 | 96 | 96 | 91 | 85 | 78 |
| Comparative Example 3 | 89 | 86 | 73 | 0 | 0 | 0 |

As seen from Table 1, comparison between the anion-exchange membranes obtained in Examples and the anion-exchange membranes obtained in Comparative Examples reveals that samples having similar levels of ion-exchange capacity (Example 3 and Comparative Example 1) yielded substantially the same levels of ionic conductivity and hydrazine permeability coefficient. The difference in graft ratio between the two samples is due to a difference in the molecular weight of the graft chain per structural unit. The results of Table 2 demonstrate that the anion-exchange membrane obtained in Example 4 had a higher alkali resistance than the anion-exchange membrane obtained in Comparative Example 3. In particular, the difference in alkali resistance between the two membranes was very large when examined in a high-concentration alkali environment.

As seen from Table 1, comparison between samples having similar levels of ion-exchange capacity (Example 4 and Comparative Example 7) reveals that the amount of area change and the ratio of hydrazine permeability coefficient [mmol/m • hr] to ionic conductivity [mS/cm] were smaller for the anion-exchange membrane of Example 4 than for the anion-exchange membrane of Comparative Example 7. This is because the substrate used in Example was composed of ultrahigh molecular weight polyethylene. A decrease in graft ratio resulted in an anion-exchange membrane (Comparative Example 4) for which the amount of area change and the hydrazine permeability coefficient were smaller than for the anion-exchange membrane obtained in Comparative Example 7. However, the anion-exchange membrane of Comparative Example 4 was not suitable for use as an electrolyte membrane since it exhibited substantially no ionic conductivity.

## INDUSTRIAL APPLICABILITY

The anion-exchange membrane according to the present invention can be used in electrochemical devices such as polymer electrolyte fuel cells, secondary batteries, alkaline water electrolyzers, and electrodialyzers.

## REFERENCE SIGNS LIST

1 Membrane-electrode assembly (MEA)
2 Anion-exchange membrane
3 Anode
4 Cathode
5 Anode separator
6 Cathode separator
11 Polymer electrolyte fuel cell (PEFC)

## Claims

**1.** An anion-exchange membrane comprising: a substrate composed of a film of ultrahigh molecular weight polyolefin; and a graft chain having a structural unit represented by the following formula (1):

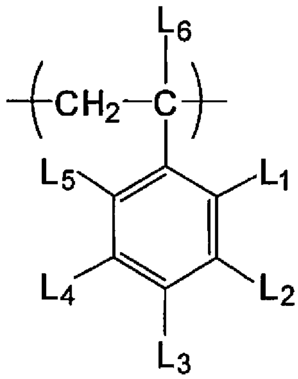

(1)

wherein

in the formula (1),
$L_1$ to $L_5$ are each independently a hydrogen atom, an alkyl group having 1 to 4 carbon atoms, an alkanol group having 1 to 4 carbon atoms, or a structure represented by the following formula (2-1) or (2-2):

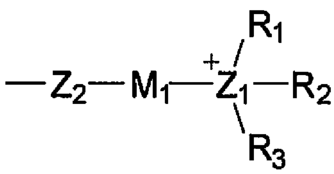

(2-1)

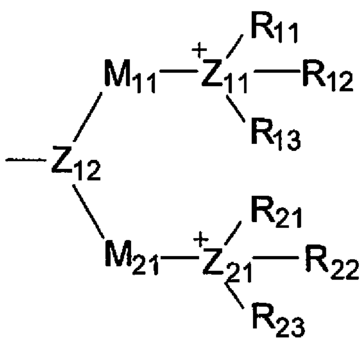

(2-2)

at least one of $L_1$ to $L_5$ is a structure represented by the formula (2-1) or (2-2), and
$L_6$ is a hydrogen atom, a methyl group, or an ethyl group, and in the formulae (2-1) and (2-2),
$R_1$ to $R_3$, $R_{11}$ to $R_{13}$, and $R_{21}$ to $R_{23}$ are each independently an alkyl group having 1 to 8 carbon atoms or an alkanol group having 1 to 8 carbon atoms,
$M_1$, $M_{11}$, and $M_{21}$ are each independently a linear hydrocarbon chain having 3 to 8 carbon atoms,

the hydrocarbon chain optionally has a substituent replacing a hydrogen atom bonded to a carbon atom of the hydrocarbon chain,
the substituent is at least one selected from the group consisting of a halogen atom or an alkyl group having 1 to 5 carbon atoms,
$Z_1$, $Z_{11}$, and $Z_{21}$ are each independently a nitrogen atom or a phosphorus atom,
$Z_2$ is a nitrogen atom bonded to one hydrogen atom, an oxygen atom, or a sulfur atom, and
$Z_{12}$ is a nitrogen atom.

**2.** The anion-exchange membrane according to claim 1, wherein
the substrate is an unstretched film, and
the anion-exchange membrane has a dry thickness of 100 μm or less.

**3.** The anion-exchange membrane according to claim 1, wherein
$L_1$ to $L_5$ are each independently a hydrogen atom or a structure represented by the formula (2-1),
any one of $L_1$ to $L_5$ is a structure represented by the formula (2-1),
$L_6$ is a hydrogen atom,
$M_1$ is an alkylene group having 3 to 6 carbon atoms,
$Z_1$ is a nitrogen atom, and
$Z_2$ is an oxygen atom.

**4.** An electrochemical element comprising the anion-exchange membrane according to claim 1.

**5.** An electrochemical device comprising the electrochemical element according to claim 4.

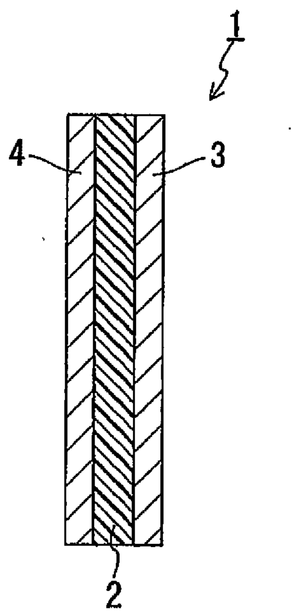


FIG.1

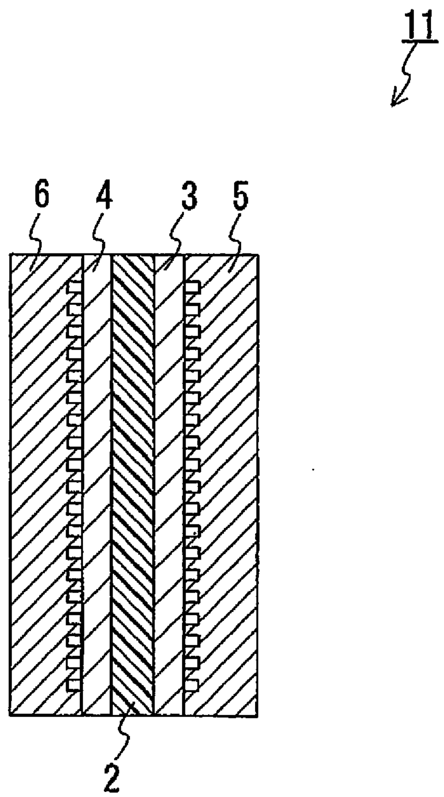


FIG.2

## INTERNATIONAL SEARCH REPORT

International application No.
PCT/JP2016/001409

A. CLASSIFICATION OF SUBJECT MATTER
*H01M8/02*(2016.01)i, *B01J41/04*(2006.01)i, *B01J41/14*(2006.01)i, *B01J47/12*(2006.01)i, *C08J5/22*(2006.01)i, *C08J7/18*(2006.01)i, *H01B1/06*(2006.01)i, *H01B13/00*(2006.01)i, *H01M8/10*(2016.01)i

According to International Patent Classification (IPC) or to both national classification and IPC

B. FIELDS SEARCHED

Minimum documentation searched (classification system followed by classification symbols)
H01M8/02, B01J41/04, B01J41/14, B01J47/12, C08J5/22, C08J7/18, H01B1/06, H01B13/00, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2012-79619 A (Tokuyama Corp.), 19 April 2012 (19.04.2012), claims 1, 5; paragraphs [0037], [0044], [0091] to [0096]; table 1 (Family: none) | 1-5 |
| A | JP 2009-193957 A (Tokuyama Corp.), 27 August 2009 (27.08.2009), claim 1; paragraphs [0136] to [0138] (Family: none) | 1-5 |
| A | JP 2009-227728 A (Organo Corp.), 08 October 2009 (08.10.2009), claim 1; paragraphs [0069], [0084] (Family: none) | 1-5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 June 2016 (01.06.16) | 14 June 2016 (14.06.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/001409

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-212306 A (Mitsubishi Chemical Corp.), 02 August 2000 (02.08.2000), claim 1; paragraphs [0055], [0064], [0074] (Family: none) | 1-5 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010516853 A